# EUROPEAN PATENT SPECIFICATION

(11) **EP 4 579 801 B1**
(45) Date of publication and mention of the grant of the patent: **02.12.2026**
(21) Application number: 24219702.8
(22) Date of filing: 13.12.2024
(51) Int. Cl.: H01M 4/36, H01M 4/505, H01M 4/525, H01M 4/587, H01M 10/0525, H01M 4/02

(54) **LITHIUM SECONDARY BATTERY**
LITHIUMSEKUNDÄRBATTERIE
BATTERIE SECONDAIRE AU LITHIUM

(30) Priority: 22.12.2023 KR 20230190456
(43) Date of publication of application: 02.07.2025
(60) Divisional application: 26213873.8
(73) Proprietor: LG Energy Solution, Ltd., Seoul 07335 (KR)
(72) Inventor: PARK, Jin Young, 34122 DAEJEON (KR); OH, Seok Jin, 34122 DAEJEON (KR); YOUN, Hee Chang, 34122 DAEJEON (KR); SUNG, Joo Hwan, 34122 DAEJEON (KR); LEE, Min Wook, 34122 DAEJEON (KR); PARK, Ji Min, 34122 DAEJEON (KR); KIM, Jong Seon, 34122 DAEJEON (KR)
(74) Representative: Plasseraud IP

(56) References cited:
- EP-A1- 3 965 201
- US-A1- 2018 342 755
- TIAN YUHANG ET AL: "Realizing high energy-density lithium-ion batteries: High Ni-content or high cut-off voltage of single-crystal layered cathodes?", JOURNAL OF ELECTROANALYTICAL CHEMISTRY, ELSEVIER, AMSTERDAM, NL, vol. 924, 26 September 2022 (2022-09-26), XP087217450, ISSN: 1572-6657, [retrieved on 20220926], DOI: 10.1016/J.JELECHEM.2022.116847

## Description

### BACKGROUND OF THE INVENTION

### Field of the Invention

The present invention relates to a lithium secondary battery, and more particularly, to a high voltage lithium secondary battery having excellent low-temperature lifespan characteristics.

### Description of the Related Art

There has been a sharp rise in demand for lithium secondary batteries, with technological advancements in electric vehicles, energy storage systems (ESS), portable electronic devices, and the like. In particular, the secondary battery is drawing attention as a new energy source for enhancing environment friendliness and energy efficiency in that the use of fossil fuels can be reduced greatly and no byproduct is generated during energy consumption. EP3965201 discloses secondary batteries comprising a positive electrode plate and a negative electrode plate, with a focus on two main cathode chemistries: high-nickel NCM811 (LiNi_{0.8}Co_{0.1}Mn_{0.1}O₂) and lithium iron phosphate (LFP) . US 2018/342755 describes a lithium secondary battery includes a cathode, an anode and a non-aqueous electrolyte

Meanwhile, in the electric vehicle sector, there is a growing need for cells having high energy density to extend all-electric range (AER), and accordingly, research is directed towards increasing the content of active materials in electrode composite layers. So as to increase the content of active materials, the content of components other than the active materials, i.e., conductive materials and/or binders, needs to be reduced. However, the reduction in the content of conductive materials decreases electrical conductivity, leading to an increase in internal resistance of cells and Li plating at low temperatures, which causes a significant and rapid decline in cell capacity.

Accordingly, there is a need for the development of lithium secondary batteries having high energy density and capable of inhibiting cell degradation at low temperatures.

### SUMMARY OF THE INVENTION

The invention is defined in the appended claims. An aspect of the present invention refers to a lithium secondary battery driven stably at high voltage and thus capable of achieving high energy density, and having excellent lifespan characteristics at low temperatures.

According to an aspect of the present invention, there is provided a lithium secondary battery according to claim 1, including
- a negative electrode including a negative electrode composite layer including a negative electrode active material comprising (i) a first negative electrode active material and (ii) a second negative electrode active material, a negative electrode conductive material, and a negative electrode binder,
- a positive electrode including a positive electrode composite layer including a positive electrode active material, a positive electrode conductive material, and a positive electrode binder, and
- an electrolyte,
   wherein the first negative electrode active material is artificial graphite, and the second negative electrode active material is natural graphite, wherein the positive electrode active material comprises a single particle type lithium nickel-based oxide having a Ni content of 70 mol % or less represented by represented by Formula 1 below, and wherein CFC defined by Equation 1 below is 0.38 to 1.962, preferably 0.39 to 1.962, and more preferably 0.40 to 1.962,
   [Formula Li₁₊ₓ[NiₐCo_{b}Mn_{c}M^{l}_{d}]O₂ wherein in Formula 1 above, M¹ comprises at least one element selected from the group consisting of Ti, Mg, Al, Zr, Y, Ba, Ca, Sr, W, Ta, Nb, and Mo, and -0.1≤x≤0.1, 0.5≤a≤0.7, 0<b<0.5, 0<c<0.5, and 0≤d≤0.2 are satisfied. Equation 1: 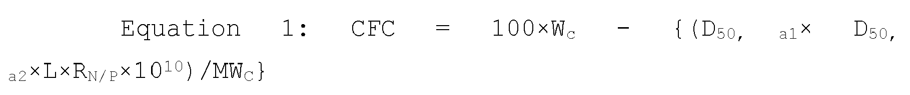 CFC = 100×Wc - { (D50, a1× D50, a2×L×RN/P×1010)/MWC}

In Equation 1 above,
- W_{c} is a weight ratio of the negative electrode conductive material with respect to a total weight of the negative electrode composite layer,
- MW_{C} is a weight value of 1 mole of carbon measured in grams, which is 12,
- D₅₀, ₐ₁ is a D₅₀ value of the first negative electrode active material measured in meters,
- D₅₀, ₐ₂ is a D₅₀ value of the second negative electrode active material measured in meters,
- L is a weight value of the negative electrode active material per unit area of the negative electrode composite layer disposed on a one side of the negative electrode, measured in g/25 cm², and
- R_{N/P} is a capacity ratio of the negative electrode to the positive electrode.

In Equation 1 above, W_{c} may be 0.001 to 0.05, preferably 0.002 to 0.4, more preferably 0.002 to 0.03, and even more preferably 0.003 to 0.03.

In Equation 1 above, L may be 0.2 to 0.5, preferably 0.25 to 0.4, more preferably 0.3 to 0.4, and even more preferably 0.3 to 0.35.

In Equation 1 above, R_{N/P} may be 1.05 to 1.10, preferably 1.06 to 1.09, and more preferably 1.07 to 1.08.

The first negative electrode active material is artificial graphite and the second negative electrode active material is natural graphite.

The first negative electrode active material may have a D₅₀ of 10 µm to 30 µm, preferably 10 µm to 20 µm, and the second negative electrode active material may have a D₅₀ of 5 µm to 25 µm, preferably 5 µm to 20 µm.

The negative electrode conductive material may be a point-type conductive material.

The positive electrode active material includes a single particle type lithium nickel-based oxide having a Ni content of 70 mol% or less. In this case, the single particle type lithium nickel-based oxide may include 30 or fewer nodules, and the nodules may have an average particle size of 0.8 µm to 4.0 µm.

The single particle type lithium nickel-based oxide is represented by Formula 1 below.

[Formula 1] Li₁₊ₓ[NiₐCO_{b}Mn_{c}M¹_{d}]O₂

In Formula 1 above, M¹ includes at least one element selected from the group consisting of Ti, Mg, Al, Zr, Y, Ba, Ca, Sr, W, Ta, Nb, and Mo, and -0.1≤x≤0.1, 0.5≤a≤0.7, 0<b<0.5, 0<c<0.5, and 0≤d≤0.2 are satisfied.

The single particle type lithium nickel-based oxide may further include a coating layer containing at least one element selected from the group consisting of Ti, Mg, Al, Zr, Y, Ba, Ca, Sr, W, Ta, Nb, and Mo, on a surface thereof.

The lithium secondary battery according to the present invention may have an energy density of 260 Wh/kg or greater and have a charge cut-off voltage of 4.35 V or greater.

The lithium secondary battery according to the present disclosure is designed such that the CFC, a relational expression involving the particle size of the negative electrode active material, loading amount of a one side surface of the negative electrode, amount of the negative electrode conductive material, and the N/P ratio, satisfies a specific range. When the lithium secondary battery satisfies a CFC value, defined by Equation (1), within the range of 0.38 to 1.962, degradation caused by lithium plating at low temperatures can be suppressed, resulting in significantly improved cycle life characteristics.

### BRIEF DESCRIPTION OF THE DRAWINGS

The above and other aspects, features and other advantages of the present invention will be more clearly understood from the following detailed description taken in conjunction with the accompanying drawings, in which:
Fig. 1 is a scanning electron microscope photograph of a single particle positive electrode active material.
Fig. 2 is a scanning electron microscope photograph of a quasi-single particle positive electrode active material.
Fig. 3 is a scanning electron microscope photograph of a secondary particle positive electrode active material.

### DETAILED DESCRIPTION OF THE PREFERRED EMBODIMENT

Hereinafter, the present invention will be described in detail.

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

In the present invention, "D₅₀" indicates a particle diameter at 50% of the volume accumulation in volume accumulated particle size distribution of powder to be measured, and may be measured using a laser diffraction method. For example, the average particle diameter D₅₀ may be measured in a way that target powder for measurement is dispersed in a dispersion medium, the dispersion medium is introduced into a commercial laser diffraction particle size measurement instrument (e.g., Microtrac MT 3000) and irradiated with ultrasonic waves having a frequency of about 28 kHz and an output of 60 W to obtain a volume accumulated particle size distribution graph, and the particle diameter at 50% of the volume accumulation is calculated.

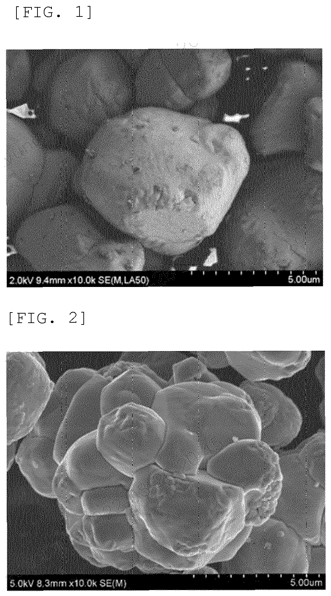

As used herein, the term "single particle type" refers to a particle formed by the clustering of 30 or less sub-particles. Each sub-particle comprising the single particle type particle is referred to as a nodule. The single particle type involves a single particle formed of one nodule and a quasi-single particle which is a composite of 2 to 30 nodules. Fig. 1 shows a scanning electron microscope photo of a positive electrode active material in the form of a single particle, and Fig. 2 shows a scanning electron microscope photo of a positive electrode active material in the form of a quasi-single particle

The term "nodule" refers to a sub-particle unit body constituting a single particle and/or a quasi-single particle, and may be a single crystal lacking any crystalline grain boundary, or a polycrystal exhibiting no grain boundaries when observed at magnifications of 5,000x to 20,000x using a scanning electron microscope (SEM).

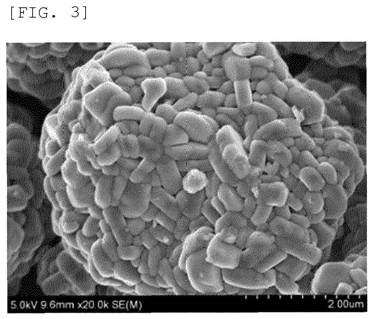

As used herein, the term "secondary particle" refers to a particle formed by the clustering of more than 30 sub-particles. To distinguish the sub-particle constituting a secondary particle from those of a single particle type particle, the sub-particle unit comprising the secondary particle is referred to as primary particle. Fig. 3 shows a scanning electron micrograph (SEM) of a positive electrode active material in the form of secondary particles.

As used herein, the term "particle" involves any one or all of a single particle, a quasi-single particle, a primary particle, a nodule, or a secondary particle.

As used herein, an average particle diameter Dₘₑₐₙ of nodules or primary particles refers to an arithmetic mean value calculated after measuring particle diameters of the nodules or primary particles observed in scanning electron microscope images.

Various embodiments of the disclosure are described herein. It will be recognized that features specified in each embodiment may be combined with other specified features to provide further embodiments.

The inventors of the present invention have found, through repeated studies to develop a lithium secondary battery having excellent low temperature lifespan characteristics, that when CFC, which is a relationship regarding a particle size of a negative active material, a loading amount on a one side of a negative electrode , a negative electrode conductive material, and an N/P ratio, satisfies a range of 0.38 to 1.962, degradation caused by Li plating at low temperatures is inhibited, resulting in significantly improved low-temperature lifespan characteristics, thereby completing the present invention.

Specifically, a lithium secondary battery according to the present invention includes a negative electrode including a negative electrode composite layer including a negative electrode active material comprising a first negative electrode active material and a second negative electrode active material, a negative electrode conductive material, and a negative electrode binder, a positive electrode including a positive electrode composite layer including a positive electrode active material, a positive electrode conductive material, and a positive electrode binder, and an electrolyte, the first negative electrode active material is artificial graphite, the second negative electrode active material is natural graphite, and the positive electrode active material comprises a single particle type lithium nickel-based oxide having a Ni content of 70 mol% or less represented by represented by Formula 1 below, and CFC defined by Equation 1 below is 0.38 to 1.962, preferably 0.39 to 1.962, and more preferably 0.40 to 1.962,

[Formula 1] Li₁₊ₓ[NiₐCo_{b}Mn_{c}M^{l}_{d}]O₂

wherein in Formula 1 above, M1 comprises at least one element selected from the group consisting of Ti, Mg, Al, Zr, Y, Ba, Ca, Sr, W, Ta, Nb, and Mo, and -0.1≤x≤0.1, 0.5≤a≤0.7, 0<b<0.5, 0<c<0.5, 0≤d≤0.2 are satisfied. Equation 1: 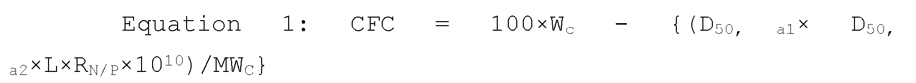 CFC = 100×Wc - { (D50, a1× D50, a2×L×RN/P×1010)/MWC}

In Equation 1 above, W_{c} is a weight ratio of the negative electrode conductive material with respect to a total weight of the negative electrode composite layer, MW_{C} is a weight value of 1 mole of carbon measured in grams, D₅₀, ₐ₁ is a D₅₀ value of the first negative electrode active material measured in meters, D₅₀, ₐ₂ is a D₅₀ value of the second negative electrode active material measured in meters, L is a weight value of the negative electrode active material per unit area of the negative electrode composite layer disposed on a one side of the negative electrode, measured in g/25 cm², and R_{N/P} is a capacity ratio of the negative electrode to the positive electrode.

When a lithium secondary battery is designed to have a CFC value satisfying the above range, lifespan at low temperatures is significantly enhanced. When the CFC is less than 0.38 or greater than 1.962, Li plating takes place during charging and discharging at low temperatures, causing a rapid decline in cell capacity. In general, Li ions have low conductivity at low temperatures, resulting in greater resistance during charging and discharging at low temperatures. Consequently, during charging at high voltage regions, the Li ions may fail to be completely inserted into a negative electrode, accumulating on a negative electrode surface to cause Li plating. However, when the negative electrode is designed to have a CFC value of 0.38 to 1.962 by adjusting the weight of the negative electrode conductive material in the negative electrode composite layer, the particle size and content of the negative electrode active material, and the N/P ratio as in the present invention, the negative electrode has greater electronic and ionic conductivity, thereby improving lithium mobility, and this results in a decrease in electrode internal resistance and Li plating, leading to improved lifespan at low temperatures.

The weight ratio W_{c} of the negative electrode conductive material with respect to the total weight of the negative electrode composite layer may be 0.001 to 0.05, preferably 0.002 to 0.03, and more preferably 0.003 to 0.03. When W_{c} satisfies the above range, the negative electrode shows excellent electrical conductivity and capacity characteristics. When W_{c} is too low, the negative electrode may have reduced battery conductivity, causing an increase in internal resistance of cells and Li plating at low temperatures, and when W_{c} is too high, negative electrode capacity may be reduced.

MW_{C} above is a weight value of 1 mole of carbon measured in grams, which is 12.

L above is a weight of the negative electrode active material per unit area (25 cm²) of the negative electrode composite layer disposed on a one side of the negative electrode, and may be 0.2 to 0.5, preferably 0.3 to 0.4, and more preferably 0.3 to 0.35. When L satisfies the above range, the ratio of the negative electrode conductive material to the negative electrode active material is appropriately maintained, and thus Li plating may be effectively prevented during charging and discharging at low temperatures, and high energy density may be achieved.

The loading amount L of the electrode can be measured using the following method: First, the electrode is punched into a 5 cm × 5 cm piece, and its weight is measured. The weight of the electrode current collector is then subtracted from the measured weight to calculate the weight of the electrode composite layer. Finally, this weight is multiplied by the weight ratio of the active material within the electrode composite layer to obtain the loading amount.

According to a preferred embodiment, L is from 0.3 to 0.4. This allows to further improve the capacity retention of the battery at low temperature, and the cycle life characteristics.

In addition, the capacity ratio of the negative electrode to the positive electrode, R_{N/P}, may be 1.05 to 1.10, preferably 1.06 to 1.09, and more preferably 1.07 to 1.08. When the negative electrode capacity is significantly lower than the positive electrode capacity, Li plating may take place, and when the negative electrode capacity is significantly greater than the positive electrode capacity, energy density may be reduced.

The method for calculating the capacity ratio of the negative electrode to the positive electrode, R_{N/P}, is well known in the industry. The R_{N/P} (N/P ratio) represents the ratio of the areal capacity of the negative electrode to that of the positive electrode. The areal capacity of the negative electrode can be calculated by multiplying the negative electrode loading amount by the specific capacity of the negative electrode active material (specific to each material). Similarly, the areal capacity of the positive electrode can be calculated by multiplying the positive electrode loading amount by the specific capacity of the positive electrode active material (specific to each material).

W_{c}, D₅₀, ₐ₁, D₅₀, ₐ₂, L, and R_{N/P} above refer to numerical values that are unitless numbers, which means no unit is involved.

Hereinafter, each component of the lithium secondary battery according to the present invention will be described in detail.

### Negative electrode

The lithium secondary battery according to the present invention includes a negative electrode including
- a first negative electrode active material,
- a second negative electrode active material,
- a negative electrode conductive material, and
- a negative electrode binder.

Specifically, the negative electrode includes a negative electrode current collector and a negative electrode composite layer formed on at least one surface of the negative electrode current collector, and the negative electrode composite layer includes a negative electrode active material, a negative electrode conductive material, and a negative electrode binder. The negative electrode active material includes the first negative electrode active material and the second negative electrode active material.

The negative electrode current collector is not particularly limited as long as it has a high conductivity without causing a chemical change in a battery. For example, copper, stainless steel, aluminum, nickel, titanium, baked carbon, copper or stainless steel that is surface-treated with one of carbon, nickel, titanium, silver, or the like, an aluminum-cadmium alloy, or the like may be used. Also, the negative electrode current collector may typically have a thickness of 3 to 500 µm, and as in the case of the positive electrode current collector, fine irregularities may be formed on the surface of the negative electrode current collector to improve the adhesion of a negative electrode active material. For example, the negative electrode current collector may be used in various forms such as a film, a sheet, a foil, a net, a porous body, a foam body, and a non-woven fabric body.

The first negative electrode active material is artificial graphite, and the second negative electrode active material is natural graphite.

The graphite-based material for the first negative electrode active material and the second negative electrode active material each independently may or may not have a coating layer formed on a surface of the graphite-based material. The coating layer may be a carbon coating layer.

The carbon coating layer may be formed by providing one or more materials selected from the group consisting of coal-tar pitch, rayon, and polyacrylonitrile-based resins or a precursor thereof on the surface of graphite-based material and then thermally decomposing the same. Preferably, the carbon coating layer includes soft carbon and may be formed by the calcination and thermal decomposition of the coal-tar pitch. The thermal treatment process for forming the carbon coating layer may be carried out at a temperature ranging from 1,000° C. to 4,000° C. In this case, when the thermal treatment process is carried out at less than 1,000° C., it may be difficult to uniformly form the carbon coating layer, and when the thermal treatment process is carried out at greater than 4,000° C., the carbon coating layer may be excessively formed during the process.

The first negative electrode active material and the second negative electrode active material may have same or different D₅₀. When they have different D₅₀, the first negative electrode active material may have a larger or smaller D₅₀ than that of the second negative electrode active material.

The first negative electrode active material may have a D₅₀ of 10 µm to 30 µm, preferably 10 µm to 20 µm. In addition, the second negative electrode active material may have a D₅₀ of 5 µm to 25 µm, preferably 5 µm to 20 µm. When the D₅₀ of the first negative electrode active material and the second negative electrode active material satisfy the above range, the CFC value readily falls within the range of the present invention, and the difference in particle size of each negative electrode active material facilitates packing between particles, resulting in a decrease in internal voids, and accordingly, electrode orientation is diminished by rolling, which may provide an effect of inhibiting electrode expansion during charging and discharging.

In the present invention, the first negative electrode active material and the second negative electrode active material may be mixed in a weight ratio of 90:10 to 50:50, preferably 90:10 to 60:40, and more preferably 90:10 to 70:30. When the mixing ratio of the first negative electrode active material and the second negative electrode active material satisfies the above range, electrochemical performance becomes greater.

The total content of the negative electrode active material, which includes the first and second negative electrode active materials may be about 80 wt% to 98 wt%, preferably about 90 wt% to 98 wt%, and more preferably about 93 wt% to 98 wt%, with respect to a total weight of the negative electrode composite layer. When the amount of the negative electrode active material satisfies the above range, excellent energy density properties may be achieved.

Then, the negative electrode conductive material is used to impart conductivity to a negative electrode, and any conductive material may be used without particular limitation as long as it has electron conductivity without causing chemical changes in batteries to be constituted. Specific examples thereof may include graphite such as natural graphite and artificial graphite; a carbon-based material such as carbon black, acetylene black, Ketjen black, channel black, furnace black, lamp black, thermal black, carbon fibers, and carbon nanotubes; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used.

Preferably, the negative electrode conductive material may be a point-type conductive material. A point-type conductive material refers to a conductive material that is in the form of a particle and thus forms point contacts with an active material. Specific examples of the point-type conductive material may include carbon particles such as carbon black, acetylene black, Ketjen black, channel black, furnace black, lamp black, thermal black, and porous carbon, but the examples of the present invention are not limited thereto. The point-type conductive material has low molecular weight and excellent dispersibility, and when used, may thus be uniformly dispersed in a negative electrode slurry, thereby reducing viscosity, and accordingly, the negative electrode slurry may have improved coating properties.

The negative electrode conductive material may be included in an amount of typically 0.1 wt% to 5 wt%, preferably 0.2 wt% to 3 wt%, and more preferably 0.3 wt% to 3 wt%, with respect to a total weight of the negative electrode active material layer. When the content of the negative electrode conductive material is too low, the negative electrode has reduced electrical conductivity, which may cause Li plating under low-temperature operation, and when the content of the negative electrode conductive material is too high, the content of the negative electrode active material decreases, which may cause degradation in capacity characteristics.

The negative electrode binder serves to improve the bonding between negative electrode active material particles and the adhesion between the negative electrode active material and the negative electrode current collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber(EPDM rubber), a sulfonated EPDM, styrene-butadiene rubber (SBR), fluorine rubber, or various copolymers thereof, and any one thereof or a mixture of two or more thereof may be used.

The negative electrode binder may be included in an amount of 1 wt% to 10 wt%, preferably 1 wt% to 8 wt%, and more preferably 1 wt% to 5 wt%, with respect to the total weight of the positive electrode active material layer.

The negative electrode may be manufactured according to a typical method for manufacturing a negative electrode. For example, the negative electrode may be prepared by mixing a negative electrode active material, a negative electrode binder, and/or a negative electrode conductive material in a solvent to prepare a negative electrode slurry, applying the negative electrode slurry onto a negative electrode current collector, followed by drying and rolling, or may be prepared by casting a separate support with the negative electrode slurry and then laminating a film separated from the support on the negative electrode current collector.

The solvent of the negative electrode slurry may be a solvent commonly used in the art, and a single solvent or a mixture of two or more solvents, selected from, for example, dimethyl sulfoxide (DMSO), isopropyl alcohol, N-methylpyrrolidone (NMP), acetone, water, or the like, may be used as the solvent. The amount of the solvent to be used is sufficient if the solvent may dissolve or disperse the negative electrode active material, the conductive material, and the binder in consideration of the applying thickness of the slurry and preparation yield, and thereafter, have a viscosity which may exhibit excellent thickness uniformity upon application for the preparation of the positive electrode.

### Positive electrode

The lithium secondary battery according to the present invention includes a positive electrode including a positive electrode active material, a positive electrode conductive material, and a positive electrode binder. Specifically, the positive electrode includes a positive electrode current collector and a positive electrode active material layer formed on at least one surface of the positive electrode current collector, and the positive electrode active material layer includes a positive electrode active material, a positive electrode conductive material, and a positive electrode binder.

The positive electrode current collector is not particularly limited as long as it has conductivity without causing a chemical change in a battery. For example, stainless steel, aluminum, nickel, titanium, baked carbon, or aluminum or stainless steel that is surface-treated with one of carbon, nickel, titanium, silver, or the like may be used. In addition, the positive electrode current collector may typically have a thickness of 3 to 500 µm, and fine irregularities may be formed on a surface of the positive electrode current collector to improve adhesion of the positive electrode active material. For example, the positive electrode current collector may be used in various forms such as a film, a sheet, a foil, a net, a porous body, a foam body, and a non-woven fabric body.

In the present invention, the positive electrode active material includes a single particle type lithium nickel-based oxide having a nickel content of 70 mol% or less, preferably 50 mol% to 70 mol%.

When the single particle type lithium nickel-based oxide having a relatively low nickel content as described above is used as the positive electrode active material, side reactions with an electrolyte are inhibited under high temperature and high voltage conditions, so that gas generation is reduced, thereby achieving excellent lifespan characteristics.

A lithium nickel-based oxide in the form of a secondary particle in which 40 to hundreds of primary particles are aggregated has a large area of contact with an electrolyte, and accordingly, side reactions with the electrolyte often take place, causing gas generation from the process of side reactions. In particular, the amount of gas generation further increases under high temperature and/or high voltage conditions, which causes a rapid deterioration of cells. In comparison, the single particle type lithium nickel-based oxide has a smaller number of nodules forming particles, which results in a smaller intra-particle interface and therefore a smaller area of contact with an electrolyte, and thus exhibit fewer side reactions with the electrolyte when compared to secondary particles, leading to significantly less gas generation. Therefore, when the single particle type lithium nickel-based oxide is applied as the positive electrode active material, excellent lifespan characteristics may be obtained even under high voltage and high temperature conditions.

In addition, the single particle type lithium nickel-based oxide having a relatively low nickel content has greater structural stability at high voltage than high-nickel or secondary particle type lithium nickel-based oxide, thereby allowing minimized deterioration of lifespan characteristics under high voltage operation. Specifically, an increase in nickel content in the lithium nickel-based oxide leads to a greater amount of highly reactive Ni⁺⁴ ions, which reduces the structural stability of the positive electrode active material during charging and discharging, causing rapid positive electrode degradation. This phenomenon is further intensified under high voltage operation. Therefore, in the present invention, lithium nickel-based oxide having a low Ni content of 70 mol% or less is applied to inhibit lifespan degradation caused by active material deterioration under high voltage operation. However, if the Ni content is too low, capacity characteristics deteriorate, and thus it is desirable for the nickel content of the lithium nickel-based oxide to be around 50 mol% to 70 mol%.

Specifically, the single particle type lithium nickel-based oxide is a lithium transition metal oxide containing nickel, manganese, and cobalt, represented by Formula 1 below.

[Formula 1] Li₁₊ₓ[NiₐCO_{b}Mn_{c}M¹_{d}]O₂

In Formula 1 above, M¹ may include one or more elements selected from the group consisting of Ti, Mg, Al, Zr, Y, Ba, Ca, Sr, W, Ta, Nb, and Mo. When the M¹ element is included, the lithium nickel-based oxide particles may have enhanced structural stability, allowing greater lifetime under high voltage operation. Preferably, the M¹ element may include at least one selected from the group consisting of Ti, Mg, Al, Zr, and Y, and more preferably, may include at least two selected from the group consisting of Ti, Mg, Al, Zr, and Y.

The 1+x represents a mole ratio of lithium in the lithium nickel-based oxide, and may satisfy -0.1≤x≤0.1, 0≤x≤0.1, or 0≤x≤0.07. When the 1+x satisfies the above range, a stable layered crystal structure may be formed.

a above represents a mole ratio of nickel among all metals excluding lithium in the lithium nickel-based oxide and may satisfy 0.5≤a≤0.7, 0.55≤a≤0.7, or 0.55≤a≤0.65. When a satisfies the above range, high capacity may be achieved through stable operation at high voltages.

b above represents a mole ratio of cobalt among all metals excluding lithium in the lithium nickel-based oxide and may satisfy 0<b<0.5, 0.05≤b≤0.4, or 0.1≤b≤0.4.

c above represents a mole ratio of manganese among all metals excluding lithium in the lithium nickel-based oxide and may satisfy 0<c<0.5, 0.05≤c≤0.4, or 0.1≤c≤0.4.

d above represents a mole ratio of the M¹ element among all metals excluding lithium in the lithium nickel-based oxide and may satisfy 0≤d≤0.2, 0≤d≤0.1, or 0<d≤0.1. When the molar ratio of the M¹ element satisfies the above range, the positive electrode active material may exhibit both excellent structural stability and capacity.

The single particle type lithium nickel-based oxide may further include a coating layer containing at least one element selected from the group consisting of Ti, Mg, Al, Zr, Y, Ba, Ca, Sr, W, Ta, Nb, and Mo, on a surface thereof.

When the coating layer is present on the surface of the lithium nickel-based oxide, the coating layer inhibits contact between an electrolyte and the lithium nickel-based oxide, producing an effect of reducing gas generation or elution of transition metals from side reactions with the electrolyte, and accordingly, lifespan characteristics may be further improved. Preferably, the coating layer may include at least two elements selected from the group consisting of Ti, Mg, Al, Zr, Y, Ba, Ca, Sr, W, Ta, Nb, and Mo, and more preferably, may include at least two elements selected from the group consisting of Ti, Mg, Al, Zr, Y, and W.

The single particle type lithium nickel-based oxide may preferably contain 30 or fewer nodules, preferably 1 to 25 nodules, and more preferably 1 to 15 nodules. When the lithium nickel-based oxide is composed of more than 30 nodules, there is an increased incidence of particle breakage during electrode manufacturing, and an increased incidence of internal cracks due to volume expansion/contraction of the nodules during charging and discharging, leading to a decrease in the improvement of high-temperature lifespan characteristics and high-temperature storage characteristics.

The nodules may have an average particle diameter of 0.8 µm to 4.0 µm, preferably 0.8 µm to 3 µm, and more preferably 1.0 µm to 3.0 µm. When the average particle size of the nodules satisfies the above range, the incidence of particle breakage is reduced to the minimum during electrode manufacturing, and resistance increase may be more effectively inhibited. In this case, the average particle size of the nodules indicates a value obtained by measuring the particle sizes of the nodules observed in SEM images obtained from the analysis of positive electrode active material powder through a scanning electron microscope, and then calculating an arithmetic mean of the measured values.

The single particle type lithium nickel-based oxide having a nickel content of 70 mol% or less may be included in an amount of at least 50 wt%, preferably at least 70 wt%, and more preferably 100 wt% of the total positive electrode active material in the positive electrode active material layer. When the proportion of the single particle type lithium nickel-based oxide having a nickel content of 70 mol% or less with respect to the total weight of the positive electrode active material satisfies the above range, stable operation at high voltage is achievable.

The positive electrode active material layer may include a portion of a positive electrode active material other than the single particle type lithium nickel-based oxide having a nickel content of 70 mol% or less, i.e., a lithium nickel-based oxide in the form of a secondary particle and/or a single particle type lithium nickel-based oxide having a nickel content exceeding 70 mol% as the positive electrode active material, but when the proportion of the secondary particle type lithium nickel-based oxide and/or the lithium nickel-based oxide having a nickel content exceeding 70 mol% is 50 wt% or greater of the entire positive electrode active material, lifespan characteristics may be degraded under high voltage operation.

The positive electrode active material may have a D₅₀ of 3.0 µm to 8.0 µm, preferably 3.0 µm to 7.5 µm. Preferably, the positive electrode active material has a D₅₀ of about 3.5 µm to 7.5 µm. When the D₅₀ of the lithium nickel-based oxide is too small, processability during electrode manufacturing declines, and electrolyte impregnation properties are reduced, leading to an increase in electrochemical properties, and when the D₅₀ is too large, resistance increases and output characteristics are degraded.

The positive electrode active material may be included in an amount of 93 wt% to 99 wt%, preferably 95 wt% to 98 wt%, and more preferably 95 wt% to 97 wt%, with respect to the total weight of the positive electrode active material layer, that is, the sum of the weights of the positive electrode active material, the positive electrode conductive material, and the positive electrode binder. When the amount of the positive electrode active material satisfies the above range, high energy density may be achieved.

Then, the positive electrode conductive material is used to impart conductivity to a positive electrode, and any conductive material may be used without particular limitation as long as it has electron conductivity without causing chemical changes in batteries to be constituted. Specific examples thereof may include graphite such as natural graphite and artificial graphite; a carbon-based material such as carbon black, acetylene black, Ketjen black, channel black, furnace black, lamp black, thermal black, carbon fibers, and carbon nanotubes; metal powder or metal fiber such as copper, nickel, aluminum, and silver; a conductive whisker such as a zinc oxide whisker and a potassium titanate whisker; a conductive metal oxide such as a titanium oxide; or a conductive polymer such as a polyphenylene derivative, and any one thereof or a mixture of two or more thereof may be used.

Preferably, the positive electrode conductive material may include a line-type conductive material and a point-type conductive material. When the line-type conductive material and the point-type conductive material are used together as a positive electrode conductive material, excellent conductivity may be obtained even with a small amount of conductive material, so that the content of the positive electrode active material in the positive electrode may be increased.

In this case, the line-type conductive material refers to a conductive material that forms line contacts with an active material, and the point-type conductive material refers to a conductive material that forms point contacts with an active material.

As the line-type conductive material, for example, carbon fibers, fibrous carbon materials such as carbon nanotubes, and metal fibers such as copper, nickel, aluminum, and silver may be used, but the examples of the present invention are not limited thereto, and various conductive materials in the form of fibers may be used.

As the point-type conductive material, for example, carbon particles such as carbon black, acetylene black, Ketjen black, channel black, furnace black, lamp black, thermal black, and porous carbon may be used, but the examples of the present invention are not limited thereto.

The positive electrode conductive material may typically be included in an amount of 0.5 wt% to 2 wt%, preferably 0.5 wt% to 1.8 wt%, and more preferably 0.8 wt% to 1.8 wt%, with respect to the total weight of the positive electrode active material layer, that is, the sum of the weights of the positive electrode active material, the positive electrode conductive material, and the positive electrode binder. When the content of the positive electrode conductive material satisfies the above range, positive electrode conductivity is excellent, and the content of the active material in the positive electrode may be increased to achieve high capacity.

In addition, the positive electrode binder serves to improve the bonding between positive electrode active material particles and the adhesion between the positive electrode active material and the positive electrode collector. Specific examples thereof may include polyvinylidene fluoride (PVDF), a polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, ethylene-propylene-diene monomer rubber(EPDM rubber), a sulfonated EPDM, styrene-butadiene rubber (SBR), fluorine rubber, or various copolymers thereof, and any one thereof or a mixture of two or more thereof may be used.

The positive electrode binder may be included in an amount of 0.5 wt% to 5 wt%, preferably 1 wt% to 4 wt%, and more preferably 1 wt% to 3 wt%, with respect to the total weight of the positive electrode active material layer.

The positive electrode may be manufactured according to a typical method for manufacturing a positive electrode. For example, the positive electrode may be prepared by mixing a positive electrode active material, a positive electrode binder, and/or a positive electrode conductive material in a solvent to prepare a positive electrode slurry, applying the positive electrode slurry onto a positive electrode current collector, followed by drying and rolling, or may be prepared by casting a separate support with the positive electrode slurry and then laminating a film separated from the support on the positive electrode current collector.

The solvent of the positive electrode slurry may be a solvent commonly used in the art, and a single solvent or a mixture of two or more solvents, selected from, for example, dimethyl sulfoxide (DMSO), isopropyl alcohol, N-methylpyrrolidone (NMP), acetone, water, or the like, may be used as the solvent. The amount of the solvent to be used is sufficient if the solvent may dissolve or disperse the positive electrode active material, the conductive material, and the binder in consideration of the applying thickness of a slurry and preparation yield, and thereafter, to have a viscosity which may exhibit excellent thickness uniformity during application for the preparation of a positive electrode.

### Electrolyte

The electrolyte may include an organic solvent and a lithium salt.

Any organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethyl carbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear or branched C2 to C20 hydrocarbon group, or cyclic C3 to C20 hydrocarbon group, and may include a double-bond aromatic ring or ether bond); amides such as dimethylformamide; dioxolanes such as 1,3-dioxolane; or sulfolanes may be used. Among these solvents, a carbonate-based solvent is preferable, and a mixture of a cyclic carbonate (e.g., ethylene carbonate or propylene carbonate) having a high ionic conductivity and a high dielectric constant and a linear carbonate-based compound having a low viscosity (e.g., ethylmethyl carbonate, dimethyl carbonate, or diethyl carbonate), which may increase charging/discharging performance of a battery, is more preferable.

Any compound may be used as the lithium salt without particular limitation as long as it may provide lithium ions used in a lithium secondary battery. Specifically, as the lithium salt, LiPF₆, LiClO₄, LiAsF₆, LiBF₄, LiSbF₆, LiAl0₄, LiAlCl₄, LiCF₃SO₃, LiC₄F₉SO₃, LiN(C₂F₅SO₃)₂, LiN(C₂F₅SO₂)₂, LiN(CF₃SO₂)₂. LiCl, LiI, LiB(C₂O₄)₂, or the like may be used. The lithium salt may be used in a concentration range of 0.1 M to 3.0 M, preferably 0.1 M to 2.0 M, and more preferably 0.5 M to 1.5 M. When the concentration of the lithium salt is in the above range, the electrolyte has suitable conductivity and viscosity, thereby exhibiting excellent performance, and lithium ions may effectively move.

In addition to the electrolyte constituents, the electrolyte may further include additives for improving life characteristics of a battery, preventing reduction in battery capacity, and increasing battery discharge capacity. For example, as the additive, various additives used in the art, for example, fluoroethylene carbonate (FEC), vinylene carbonate (VC), vinylethylene carbonate (VEC), ethylene sulfate (ESa), lithium difluorophosphate (LiPO₂F₂), lithium bisoxalatoborate (LiBOB), lithium tetrafluoro borate (LiBF₄), lithium difluorooxalato borate (LiDFOB), lithium difluorobisoxalatophosphate (LiDFBP), lithium tetrafluorooxalatophosphate (LiTFOP), lithium methyl sulfate (LiMS), lithium ethyl sulfate (LiES), propanesultone (PS), propensultone (PRS), succinonitrile (SN), adiponitrile (AND), 1,3,6-hexanetricarbonitrile (HTCN), 1,4-dicyano-2-butene (DCB), fluorobenzene (FB), ethyldi(prop-2-yn-1-yl)phosphate (EDP), 5-methyl-5propargyloxylcarbonyl-1,3-dioxane-2-one (MPOD), and the like are used alone or in combination, but the examples of the present invention are not limited thereto. The additive may be included in an amount of 0.1 wt% to 10 wt%, preferably 0.1 wt% to 5 wt%, with respect to a total weight of the electrolyte.

### Separator

The lithium secondary battery according to the present invention may further include a separator between the positive electrode and the negative electrode, if necessary. The separator separates the negative electrode and the positive electrode and provides a movement path of lithium ions, and any separator may be used as the separator without particular limitation as long as it is typically used in secondary batteries, and particularly, a separator having excellent moisture-retention of an electrolyte as well as low resistance to ion movement in the electrolyte is preferable. Specifically, a porous polymer film, for example, a porous polymer film prepared using a polyolefin-based polymer such as an ethylene homopolymer, a propylene homopolymer, an ethylene/butene copolymer, an ethylene/hexene copolymer, and an ethylene/methacrylate copolymer, or a laminated structure having two or more layers thereof may be used. In addition, a typical porous non-woven fabric, for example, a non-woven fabric formed of glass fiber having a high melting point, polyethylene terephthalate fiber, or the like may be used. In addition, a coated separator including a ceramic component or a polymer material may be used to secure heat resistance or mechanical strength, and may be optionally used in a single-layered or a multi-layered structure.

The lithium secondary battery of the present invention as described above may be stably driven at high voltage to achieve high energy density, and has excellent lifespan characteristics at low temperatures.

It is desirable for the lithium secondary battery according to the present invention to have a charge cut-off voltage of 4.35 V or greater, preferably 4.35 V to 5 V, and more preferably 4.35 V to 4.5 V. When the charge cut-off voltage satisfies the above range during operation, high energy density may be achieved. Specifically, the lithium secondary battery according to the present invention may have an energy density of 260 Wh/kg or greater, preferably 260 Wh/kg to 330 Wh/kg, and more preferably 270 Wh/kg to 320 Wh/kg.

The capacity of the lithium secondary battery is affected not only by the type of active material used but also by the driving voltage range. In particular, when lithium nickel cobalt manganese-based oxide is used as the positive electrode active material, higher driving voltage may lead to higher capacity. However, when the driving voltage increases, side reactions with an electrolyte increase during charging and discharging, and the positive electrode active material undergoes rapid structural collapse, resulting in rapidly degraded lifespan characteristics. This phenomenon is more prominent in high-nickel lithium nickel cobalt manganese-based oxide having a high nickel content. However, when the lithium nickel-based oxide having a nickel content of 70 mol% or less and a single particle form is applied as the positive electrode active material, stable operation is achievable even at a high voltage of 4.35 V or greater, thereby obtaining high energy density.

The lithium secondary battery according to the present invention may be usefully applied to portable devices such as a mobile phone, a laptop computer, and a digital camera, and to electric cars such as a hybrid electric vehicle (HEV). The lithium secondary battery according to the present invention is driven at high voltage and may thus achieve high energy density, and has excellent safety in the event of thermal runaway and may thus be particularly usefully used in the electric vehicle field.

According to another embodiment of the present invention, a battery module including the lithium secondary battery according to the present invention as a unit cell, and a battery pack including the same are provided. Accordingly, the present invention also relates to a battery module comprising the lithium secondary battery according to the present invention.

The battery module or the battery pack may be used as a power source of one or more medium-or-large-sized devices, for example, a power tool, an electric car such as an electric vehicle (EV), a hybrid electric vehicle (HEV), and a plug-in hybrid electric vehicle (PHEV), or a power storage system. Accordingly, the invention also relates to an electrical vehicle comprising the battery module of the present invention as a power source.

Hereinafter, examples of the present invention will be described in detail in such a manner that it may easily be performed by a person skilled in the art to which the present invention pertains. The present invention may, however, be embodied in many different forms, and is not limited to Examples set forth herein.

### Example 1

### <Preparation of negative electrode>

A negative electrode active material, a negative electrode conductive material, styrene-butadiene rubber (SBR), and carboxymethyl cellulose (CMC) were mixed in a weight ratio of 96.15: 0.5: 2.3: 1.05 in water to prepare a negative electrode slurry. In this case, artificial graphite having a D₅₀ of 16 µm and natural graphite having a D₅₀ of 18 µm were mixed in a weight ratio of 8:2 and used as the negative electrode active material, and Super C 65 was used as the negative electrode conductive material.

The negative electrode slurry was applied to both sides of a copper current collector sheet such that a weight(g) value (L) of the negative electrode active material per unit area (25 cm²) of one surface of the copper current collector was 0.3415, and then dried and rolled to prepare a negative electrode.

### <Preparation of positive electrode>

A positive electrode active material, a positive electrode conductive material, and a PVDF binder were mixed in a weight ratio of 97:1.2:1.8 in N-methylpyrrolidone to prepare a positive electrode slurry (solid content: 75 wt%). In this case, 100% of single particle type Li[Ni_{0.60}Co_{0.10}Mn_{0.30}]O₂ was used as the positive electrode active material, and carbon nanotubes and acetylene black were mixed in a weight ratio of 2:1 and used as the positive electrode conductive material.

The positive electrode slurry was applied to both sides of an aluminum current collector sheet such that a capacity ratio of the negative electrode to the positive electrode (R_{N/P}) was 1.07, and then dried and rolled to prepare a positive electrode.

### <Manufacture of lithium secondary battery>

A separator was interposed between the positive electrode and the negative electrode prepared above to produce an electrode assembly, and the electrode assembly was inserted into a battery case. Thereafter, an electrolyte was injected to manufacture a lithium secondary battery cell.

In this case, as the electrolyte, an electrolyte prepared by dissolving 1.0 M of LiPF₆ in a mixed solvent containing ethylene carbonate (EC) and ethyl methyl carbonate (EMC) in a volume ratio of 3:7, and then adding 0.5 wt% of vinylene carbonate (VC), 0.5 wt% of propane sultone (PS), 1 wt% of ethylene sulfate (ESa), 1 wt% of lithium difluorophosphate, and 0.2 wt% of LiBF₄ as additives was used.

### Example 2

A lithium secondary battery was manufactured in the same manner as in Example 1, except that carbon nanotubes were used alone as a positive electrode conductive material.

### Example 3

A lithium secondary battery was manufactured in the same manner as in Example 1, except that in the preparation of the negative electrode, the negative electrode slurry was applied such that the weight (g) value (L) of the negative electrode active material per unit area (25 cm²) of one surface of the copper current collector was 0.3175, in the preparation of the positive electrode, the positive electrode slurry was applied such that the capacity ratio of the negative electrode to the positive electrode (R_{N/P}) was 1.072, and carbon nanotubes and acetylene black were mixed in a weight ratio of 5:1 and used as the positive electrode conductive material.

### Example 4

### <Preparation of negative electrode>

A negative electrode active material, a negative electrode conductive material, styrene-butadiene rubber (SBR), and carboxymethyl cellulose (CMC) were mixed in a weight ratio of 94.65: 2: 2.3: 1.05 in water to prepare a negative electrode slurry. In this case, artificial graphite having a D₅₀ of 13.5 µm and natural graphite having a D₅₀ of 9 µm were mixed in a weight ratio of 8:2 and used as the negative electrode active material, and Super C 65 was used as the negative electrode conductive material.

The negative electrode slurry was applied to both sides of a copper current collector sheet such that a weight(g) value (L) of the negative electrode active material per unit area (25 cm²) of one surface of the copper current collector was 0.3513, and then dried and rolled to prepare a negative electrode.

### <Preparation of positive electrode>

A positive electrode active material, a positive electrode conductive material, and a PVDF binder were mixed in a weight ratio of 97:1.2:1.8 in N-methylpyrrolidone to prepare a positive electrode slurry (solid content: 75 wt%). In this case, 100% of single particle type Li[Ni_{0.60}Co_{0.10}Mn_{0.30}]O₂ was used as the positive electrode active material, and carbon nanotubes and acetylene black were mixed in a weight ratio of 2:1 and used as the positive electrode conductive material.

The positive electrode slurry was applied to both sides of an aluminum current collector sheet such that a capacity ratio of the negative electrode to the positive electrode (R_{N/P}) was 1.0945, and then dried and rolled to prepare a positive electrode.

### <Manufacture of lithium secondary battery>

A separator was interposed between the positive electrode and the negative electrode prepared above to produce an electrode assembly, and the electrode assembly was inserted into a battery case. Thereafter, an electrolyte was injected to manufacture a lithium secondary battery cell.

In this case, as the electrolyte, an electrolyte prepared by dissolving 1.0 M of LiPF₆ in a mixed solvent containing ethylene carbonate (EC) and ethyl methyl carbonate (EMC) in a volume ratio of 3:7, and then adding 0.5 wt% of vinylene carbonate (VC), 0.5 wt% of propane sultone (PS), 1 wt% of ethylene sulfate (ESa), 1 wt% of lithium difluorophosphate, and 0.2 wt% of LiBF₄ as additives was used.

### Example 5

### <Preparation of negative electrode>

A negative electrode active material, a negative electrode conductive material, styrene-butadiene rubber (SBR), and carboxymethyl cellulose (CMC) were mixed in a weight ratio of 95.90:0.75:2.3:1.05 in water to prepare a negative electrode slurry. In this case, artificial graphite having a D50 of 16um and natural graphite having a D50 of 18µm were mixed in a weight ratio of 8:2 and used as the negative electrode active material, and Super C 65 was used as the negative electrode conductive material.

The negative electrode slurry was applied to both sides of a copper current collector sheet such that a weight (g) value (L) of the negative electrode active material per unit area (25 cm²) of one surface of the copper current collector was 0. 3391, and then dried and rolled to prepare a negative electrode.

### <Preparation of positive electrode>

A positive electrode active material, a positive electrode conductive material, and a PVDF binder were mixed in a weight ratio of 97:1.2:1.8 in N-methylpyrrolidone to prepare a positive electrode slurry (solid content: 75 wt%). In this case, 100% of single particle type Li[Ni_{0.60}Co_{0.10}Mn_{0.30}]O₂ was used as the positive electrode active material, and carbon nanotubes and acetylene black were mixed in a weight ratio of 2:1 and used as the positive electrode conductive material.

The positive electrode slurry was applied to both sides of an aluminum current collector sheet such that a capacity ratio of the negative electrode to the positive electrode (R_{N/P}) was 1.0730, and then dried and rolled to prepare a positive electrode.

### <Manufacture of lithium secondary battery>

A separator was interposed between the positive electrode and the negative electrode prepared above to produce an electrode assembly, and the electrode assembly was inserted into a battery case. Thereafter, an electrolyte was injected to manufacture a lithium secondary battery cell.

In this case, as the electrolyte, an electrolyte prepared by dissolving 1.0 M of LiPF6 in a mixed solvent containing ethylene carbonate (EC) and ethyl methyl carbonate (EMC) in a volume ratio of 3:7, and then adding 0.5 wt% of vinylene carbonate (VC), 0.5 wt% of propane sultone (PS), 1 wt% of ethylene sulfate (ESa), 1 wt% of lithium difluorophosphate, and 0.2 wt% of LiBF4 as additives was used.

### Example 6

### <Preparation of negative electrode>

A negative electrode active material, a negative electrode conductive material, styrene-butadiene rubber (SBR), and carboxymethyl cellulose (CMC) were mixed in a weight ratio of 95.65:1.0:2.3:1.05 in water to prepare a negative electrode slurry. In this case, artificial graphite having a D50 of 17.6um and natural graphite having a D50 of 18µm were mixed in a weight ratio of 8:2 and used as the negative electrode active material, and Super C 65 was used as the negative electrode conductive material.

The negative electrode slurry was applied to both sides of a copper current collector sheet such that a weight (g) value (L) of the negative electrode active material per unit area (25 cm²) of one surface of the copper current collector was 0.3512, and then dried and rolled to prepare a negative electrode.

### <Preparation of positive electrode>

A positive electrode active material, a positive electrode conductive material, and a PVDF binder were mixed in a weight ratio of 97:1.2:1.8 in N-methylpyrrolidone to prepare a positive electrode slurry (solid content: 75 wt%). In this case, 100% of single particle type Li[Ni_{0.60}Co_{0.10}Mn_{0.30}]O₂ was used as the positive electrode active material, and carbon nanotubes and acetylene black were mixed in a weight ratio of 2:1 and used as the positive electrode conductive material.

The positive electrode slurry was applied to both sides of an aluminum current collector sheet such that a capacity ratio of the negative electrode to the positive electrode (R_{N/P}) was 1.0950, and then dried and rolled to prepare a positive electrode.

### <Manufacture of lithium secondary battery>

A separator was interposed between the positive electrode and the negative electrode prepared above to produce an electrode assembly, and the electrode assembly was inserted into a battery case. Thereafter, an electrolyte was injected to manufacture a lithium secondary battery cell.

In this case, as the electrolyte, an electrolyte prepared by dissolving 1.0 M of LiPF6 in a mixed solvent containing ethylene carbonate (EC) and ethyl methyl carbonate (EMC) in a volume ratio of 3:7, and then adding 0.5 wt% of vinylene carbonate (VC), 0.5 wt% of propane sultone (PS), 1 wt% of ethylene sulfate (ESa), 1 wt% of lithium difluorophosphate, and 0.2 wt% of LiBF₄ as additives was used.

### Example 7

### <Preparation of negative electrode>

A negative electrode active material, a negative electrode conductive material, styrene-butadiene rubber (SBR), and carboxymethyl cellulose (CMC) were mixed in a weight ratio of 95.40:1.25:2.3:1.05 in water to prepare a negative electrode slurry. In this case, artificial graphite having a D₅₀ of 16um and natural graphite having a D50 of 18µm were mixed in a weight ratio of 8:2 and used as the negative electrode active material, and Super C 65 was used as the negative electrode conductive material.

The negative electrode slurry was applied to both sides of a copper current collector sheet such that a weight (g) value (L) of the negative electrode active material per unit area (25 cm²) of one surface of the copper current collector was 0.3182, and then dried and rolled to prepare a negative electrode.

### <Preparation of positive electrode>

A positive electrode active material, a positive electrode conductive material, and a PVDF binder were mixed in a weight ratio of 97:1.2:1.8 in N-methylpyrrolidone to prepare a positive electrode slurry (solid content: 75 wt%). In this case, 100% of single particle type Li[Ni_{0.60}Co_{0.10}Mn_{0.30}]O₂ was used as the positive electrode active material, and carbon nanotubes and acetylene black were mixed in a weight ratio of 2:1 and used as the positive electrode conductive material.

The positive electrode slurry was applied to both sides of an aluminum current collector sheet such that a capacity ratio of the negative electrode to the positive electrode (RN/P) was 1.058, and then dried and rolled to prepare a positive electrode.

### <Manufacture of lithium secondary battery>

A separator was interposed between the positive electrode and the negative electrode prepared above to produce an electrode assembly, and the electrode assembly was inserted into a battery case. Thereafter, an electrolyte was injected to manufacture a lithium secondary battery cell.

In this case, as the electrolyte, an electrolyte prepared by dissolving 1.0 M of LiPF6 in a mixed solvent containing ethylene carbonate (EC) and ethyl methyl carbonate (EMC) in a volume ratio of 3:7, and then adding 0.5 wt% of vinylene carbonate (VC), 0.5 wt% of propane sultone (PS), 1 wt% of ethylene sulfate (ESa), 1 wt% of lithium difluorophosphate, and 0.2 wt% of LiBF₄ as additives was used.

### Example 8

### <Preparation of negative electrode>

A negative electrode active material, a negative electrode conductive material, styrene-butadiene rubber (SBR), and carboxymethyl cellulose (CMC) were mixed in a weight ratio of 94.90:1.75:2.3:1.05 in water to prepare a negative electrode slurry. In this case, artificial graphite having a D₅₀ of 17.6 µm and natural graphite having a D50 of 18µm were mixed in a weight ratio of 8:2 and used as the negative electrode active material, and Super C 65 was used as the negative electrode conductive material.

The negative electrode slurry was applied to both sides of a copper current collector sheet such that a weight (g) value(L) of the negative electrode active material per unit area (25 cm²) of one surface of the copper current collector was 0.3460, and then dried and rolled to prepare a negative electrode.

### <Preparation of positive electrode>

A positive electrode active material, a positive electrode conductive material, and a PVDF binder were mixed in a weight ratio of 97:1.2:1.8 in N-methylpyrrolidone to prepare a positive electrode slurry (solid content: 75 wt%) . In this case, 100% of single particle type Li[Ni_{0.60}Co_{0.10}Mn_{0.30}]O₂ was used as the positive electrode active material, and carbon nanotubes and acetylene black were mixed in a weight ratio of 2:1 and used as the positive electrode conductive material.

The positive electrode slurry was applied to both sides of an aluminum current collector sheet such that a capacity ratio of the negative electrode to the positive electrode (RN/P) was 1.083, and then dried and rolled to prepare a positive electrode.

### <Manufacture of lithium secondary battery>

A separator was interposed between the positive electrode and the negative electrode prepared above to produce an electrode assembly, and the electrode assembly was inserted into a battery case. Thereafter, an electrolyte was injected to manufacture a lithium secondary battery cell.

In this case, as the electrolyte, an electrolyte prepared by dissolving 1.0 M of LiPF₆ in a mixed solvent containing ethylene carbonate (EC) and ethyl methyl carbonate (EMC) in a volume ratio of 3:7, and then adding 0.5 wt% of vinylene carbonate (VC), 0.5 wt% of propane sultone (PS), 1 wt% of ethylene sulfate (ESa), 1 wt% of lithium difluorophosphate, and 0.2 wt% of LiBF₄ as additives was used.

### Comparative Example 1

A lithium secondary battery was manufactured in the same manner as in Example 1, except that in the preparation of the negative electrode slurry, the negative electrode active material, styrene-butadiene rubber (SBR), and carboxymethyl cellulose (CMC) were mixed in a weight ratio of 96.65: 2.3: 1.05 in water to prepare a negative electrode slurry, and the negative electrode slurry was applied to both sides ofa copper current collector sheet such that a weight(g) value (L) of the negative electrode active material per unit area (25 cm²) of one surface of the copper current collector was 0.3205 to prepare a negative electrode, and in the preparation of the positive electrode, carbon nanotubes were used alone as the positive electrode conductive material, and the positive electrode slurry was applied such that the capacity ratio of the negative electrode to the positive electrode (R_{N/P}) was 1.072.

### Comparative Example 2

A lithium secondary battery was manufactured in the same manner as in Example 1, except that in the preparation of the negative electrode slurry, the negative electrode active material, styrene-butadiene rubber (SBR), and carboxymethyl cellulose (CMC) were mixed in a weight ratio of 96.65: 2.3: 1.05 in water to prepare a negative electrode slurry, and the negative electrode slurry was applied to both sides ofa copper current collector sheet such that a weight(g) value (L) of the negative electrode active material per unit area (25 cm²) of one surface of the copper current collector was 0.3375 to prepare a negative electrode, and in the preparation of the positive electrode, carbon nanotubes and acetylene black are mixed in a weight ratio of 5:1 and used as the positive electrode conductive material, and the positive electrode slurry was applied such that the capacity ratio of the negative electrode to the positive electrode (R_{N/P}) was 1.075.

### Comparative Example 3

A lithium secondary battery was manufactured in the same manner as in Example 1, except that in the preparation of the negative electrode slurry, the negative electrode active material, the negative electrode conductive material, styrene-butadiene rubber (SBR), and carboxymethyl cellulose (CMC) were mixed in a weight ratio of 96.4 : 0.25 : 2.3 : 1.05 in water to prepare a negative electrode slurry, and the negative electrode slurry was applied to both sides ofa copper current collector sheet such that a weight(g) value (L) of the negative electrode active material per unit area (25 cm²) of one surface of the copper current collector was 0.3167 to prepare a negative electrode, and in the preparation of the positive electrode, carbon nanotubes and acetylene black are mixed in a weight ratio of 5:1 and used as the positive electrode conductive material, and the positive electrode slurry was applied such that the capacity ratio of the negative electrode to the positive electrode (R_{N/P}) was 1.072.

### Comparative Example 4

A lithium secondary battery was manufactured in the same manner as in Example 1, except that in the preparation of the negative electrode slurry, the negative electrode active material, the negative electrode conductive material, styrene-butadiene rubber (SBR), and carboxymethyl cellulose (CMC) were mixed in a weight ratio of 96.4 : 0.25 : 2.3 : 1.05 in water to prepare a negative electrode slurry, and the negative electrode slurry was applied to both sides ofa copper current collector sheet such that a weight(g) value (L) of the negative electrode active material per unit area (25 cm²) of one surface of the copper current collector was 0.3428 to prepare a negative electrode, and in the preparation of the positive electrode, carbon nanotubes were used alone as the positive electrode conductive material, and the positive electrode slurry was applied such that the capacity ratio of the negative electrode to the positive electrode (R_{N/P}) was 1.070.

### Comparative Example 5

A lithium secondary battery was manufactured in the same manner as in Example 1, except that in the preparation of the negative electrode, the negative electrode slurry was applied such that the weight(g) value (L) of the negative electrode active material per unit area (25 cm²) of one surface of the copper current collector was 0.3915, and in the preparation of the positive electrode, the positive electrode slurry was applied such that the capacity ratio of the negative electrode to the positive electrode (R_{N/P}) was 1.3362.

### Comparative Example 6

A lithium secondary battery was manufactured in the same manner as in Example 4, except that in the preparation of the negative electrode, the negative electrode slurry was applied such that the weight (g) value (L) of the negative electrode active material per unit area (25 cm²) of one surface of the copper current collector was 0.2986, and in the preparation of the positive electrode, the positive electrode slurry was applied such that the capacity ratio of the negative electrode to the positive electrode (R_{N/P}) was 1.0010.

CFC values according to Equation 1 below were calculated for each of the lithium secondary batteries manufactured by Examples 1 to 8 and Comparative Examples 1 to 6 described above, and are shown in Table 1 below. In this case, MW_{C} was 12 g in the calculation. Equation 1: 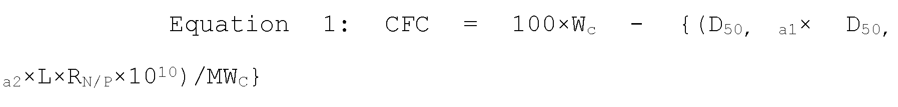 CFC = 100×Wc - {(D50, a1× D50, a2×L×RN/P×1010)/MWC}

In Equation 1 above, W_{c} is a weight ratio of the negative electrode conductive material with respect to a total weight of the negative electrode composite layer, MW_{C} is a weight value of 1 mole of carbon measured in grams, D₅₀, ₐ₁ is a D₅₀ value of the first negative electrode active material measured in meters, D₅₀, ₐ₂ is a D₅₀ value of the second negative electrode active material measured in meters, L is a weight value of the negative electrode active material per unit area of the negative electrode composite layer disposed on a one side of the negative electrode, measured in g/25 cm², and R_{N/P} is a capacity ratio of the negative electrode to the positive electrode.

**[Table 1]**

| | 100 W_{c} | D₅₀, ₐ₁[m] | D₅₀, ₐ₂[m] | L[g/25 cm²] | R_{N/P} | CFC |
|---|---|---|---|---|---|---|
| Example 1 | 0.5 | 1.6×10⁻⁵ | 1.8×10⁻⁵ | 0.3415 | 1.0700 | 0.4123028 |
| Example 2 | 0.5 | 1.6×10⁻⁵ | 1.8×10⁻⁵ | 0.3415 | 1.0700 | 0.4123028 |
| Example 3 | 0.5 | 1.6×10⁻⁵ | 1.8×10⁻⁵ | 0.3175 | 1.0720 | 0.4183136 |
| Example 4 | 2 | 1.35×10⁻⁵ | 9×10⁻⁶ | 0.3513 | 1.0945 | 1.961069593 |
| Example 5 | 0.75 | 1.6×10⁻⁵ | 1.8×10⁻⁵ | 0.3391 | 1.073 | 0.662674968 |
| Example 6 | 1 | 1.76×10⁻⁵ | 1.8×10⁻⁵ | 0.3512 | 1.095 | 0.898475104 |
| Example 7 | 1.25 | 1.6×10⁻⁵ | 1.8×10⁻⁵ | 0.3182 | 1.058 | 1.169202656 |
| Example 8 | 1.75 | 1.76×10⁻⁵ | 1.8×10⁻⁵ | 0.3460 | 1.083 | 1.6510744 |
| Comparative Example 1 | 0 | 1.6×10⁻⁵ | 1.8×10⁻⁵ | 0.3205 | 1.0720 | -0.08245824 |
| Comparative Example 2 | 0 | 1.6×10⁻⁵ | 1.8×10⁻⁵ | 0.3375 | 1.0750 | -0.087075 |
| Comparative Example 3 | 0.25 | 1.6×10⁻⁵ | 1.8×10⁻⁵ | 0.3167 | 1.0720 | 0.168519424 |
| Comparative Example 4 | 0.25 | 1.6×10⁻⁵ | 1.8×10⁻⁵ | 0.3428 | 1.0700 | 0.16196896 |
| Comparative Example 5 | 0.5 | 1.6×10⁻⁵ | 1.8×10⁻⁵ | 0.3915 | 1.3362 | 0.374450648 |
| Comparative Example 6 | 2 | 1.35×10⁻⁵ | 9×10⁻⁶ | 0.2986 | 1.0010 | 1.969736517 |

### Experimental Example 1: Evaluation of low temperature characteristic

Charging/discharging in which each lithium secondary battery manufactured by Examples 1 to 8 and Comparative Examples 1 to 6 was charged up to 4.35 V at 0.2 C at -10 °C and then discharged up to 2.5 V at 0.33 C was set as one cycle, and the cycle was repeated 50 times to measure capacity retention using a cycler from PNE.

In addition, the energy density was measured for each lithium secondary battery manufactured by Examples 1 to 8 and Comparative Examples 1 to 6 when operated within a voltage range of 2.5V to 4.35V.

The measurement results are shown in Table 2 below.

**[Table 2]**

| | Initial Capacity(Ah) | Capacity after 50 Cycles(Ah) | Capacity retention (%) after 50 cycles | Energy Density(Wh/kg) |
|---|---|---|---|---|
| Example 1 | 31.047 | 29.041 | 93.5388 | 293.31 |
| Example 2 | 31.363 | 29.337 | 93.5402 | 293.37 |
| Example 3 | 28.751 | 25.957 | 90.2821 | 288.57 |
| Example 4 | 31.051 | 29.126 | 93.8005 | 290.99 |
| Example 5 | 30.934 | 28.414 | 91.8536 | 293.88 |
| Example 6 | 31.279 | 28.192 | 90.1308 | 291.42 |
| Example 7 | 28.652 | 25.276 | 88.2172 | 288.59 |
| Example 8 | 30.854 | 27.065 | 87.7196 | 292.24 |
| Comparative Example 1 | 28.053 | 14.155 | 50.4581 | 286.54 |
| Comparative Example 2 | 31.106 | 25.131 | 80.7915 | 285.46 |
| Comparative Example 3 | 29.356 | 21.582 | 73.5182 | 291.67 |
| Comparative Example 4 | 30.847 | 24.034 | 77.9136 | 288.72 |
| Comparative Example 5 | 27.604 | 10.308 | 37.3424 | 271.21 |
| Comparative Example 6 | 27.407 | 15.147 | 55.2669 | 291.62 |

As shown in Table 2 above, the lithium secondary batteries of Examples 1 to 8 with CFC satisfying the range of the present invention exhibited a high capacity retention of 87% or greater after 50 cycles at a low temperature of - 10 °C, whereas the lithium secondary batteries of Comparative Examples 1 to 6 with CFC outside the range of the present invention exhibited a very low capacity retention of 37% to 80% after 50 cycles at a low temperature of -10 °C.

The lithium secondary battery according to the present disclosure is designed such that the CFC, a relational expression involving the particle size of the negative electrode active material, loading amount of a one side surface of the negative electrode, amount of the negative electrode conductive material, and the N/P ratio, satisfies a specific range. When the lithium secondary battery satisfies a CFC value, defined by Equation (1), within the range of 0.38 to 1.962, degradation caused by lithium plating at low temperatures can be suppressed, resulting in significantly improved cycle life characteristics.

Meanwhile, the lithium secondary battery according to the present disclosure uses a single-particle type positive electrode active material with a nickel content of 70 mol% or less, preferably 50 to 70 mol%, as the positive electrode active material. In this case, stable operation can be achieved at high voltages of 4.35V or higher, enabling the realization of high energy density.

## Claims

1. A lithium secondary battery comprising:
a negative electrode comprising a negative electrode composite layer comprising a negative electrode active material comprising (i) a first negative electrode active material and (ii) a second negative electrode active material, a negative electrode conductive material, and a negative electrode binder;
a positive electrode comprising a positive electrode composite layer comprising a positive electrode active material, a positive electrode conductive material, and a positive electrode binder; and
an electrolyte,
wherein the first negative electrode active material is artificial graphite, and the second negative electrode active material is natural graphite,
wherein the positive electrode active material comprises a single particle type lithium nickel-based oxide having a Ni content of 70 mol% or less represented by Formula 1 below, and
wherein CFC defined by Equation 1 below is 0.38 to 1.962,
[Formula 1] Li₁₊ₓ[NiₐCo_{b}MnₑM¹_{d}]O₂
wherein in Formula 1 above, M¹ comprises at least one element selected from the group consisting of Ti, Mg, Al, Zr, Y, Ba, Ca, Sr, W, Ta, Nb, and Mo, and -0.1≤x≤0.1, 0.5≤a≤0.7, 0<b<0.5, 0<c<0.5, and 0≤d≤0.2 are satisfied. Equation 1: $CFC = 100 \times {W}_{c} - \left\{\left({D}_{50 , a 1}\times {D}_{50 , a 2}\times L\times {R}_{N / P}\times {10}^{10}\right)/{MW}_{C}\right\}$
wherein in Equation 1 above, W_{c} is a weight ratio of the negative electrode conductive material with respect to a total weight of the negative electrode composite layer, MW_{C} is a weight value of 1 mole of carbon measured in grams, D₅₀, ₐ₁ is a D₅₀ value of the first negative electrode active material measured in meters, D₅₀, ₐ₂ is a D₅₀ value of the second negative electrode active material measured in meters, L is a weight value of the negative electrode active material per unit area of the negative electrode composite layer disposed on a one side of the negative electrode, measured in g/25 cm², and R_{N/P} is a capacity ratio of the negative electrode to the positive electrode.

2. The lithium secondary battery according to claim 1, wherein the negative electrode conductive material is a point-type conductive material.

3. The lithium secondary battery according to any of the preceding claims, wherein W_{c} above is 0.001 to 0.05.

4. The lithium secondary battery according to any of the preceding claims, wherein the first negative electrode active material has a D₅₀ of 10 µm to 30 µm, and
the second negative electrode active material has a D₅₀ of 5 µm to 25 µm.

5. The lithium secondary battery according to any of the preceding claims, wherein L above is 0.2 to 0.5.

6. The lithium secondary battery according to any of the preceding claims, wherein R_{N/P} above is 1.05 to 1.10.

7. The lithium secondary battery according to any of the preceding claims, wherein the single particle type lithium nickel-based oxide comprises 30 or fewer nodules, and the nodules have an average particle size of 0.8 µm to 4.0 µm.

8. The lithium secondary battery according to any of the preceding claims, wherein the single particle type lithium nickel-based oxide further comprises a coating layer containing at least one element selected from the group consisting of Ti, Mg, Al, Zr, Y, Ba, Ca, Sr, W, Ta, Nb, and Mo, on a surface thereof.

9. The lithium secondary battery according to any of the preceding claims, wherein the lithium secondary battery has an energy density of 260 Wh/kg or greater.

10. The lithium secondary battery according to any of the preceding claims, wherein the lithium secondary battery has a charge cut-off voltage of 4.35 V or greater.

11. A battery module comprising the lithium secondary battery according to any of the preceding claims.

12. An electrical vehicle comprising the battery module of claim 11 as a power source.

## Patentansprüche

1. Lithium-Sekundärbatterie, umfassend:
eine negative Elektrode umfassend eine Verbundschicht der negativen Elektrode umfassend ein Aktivmaterial der negativen Elektrode das (i) ein erstes Aktivmaterial der negativen Elektrode und (ii) ein zweites Aktivmaterial der negativen Elektrode umfasst, ein Leitmaterial der negativen Elektrode und ein Bindemittel der negativen Elektrode;
eine positive Elektrode umfassend eine Verbundschicht der positiven Elektrode umfassend ein Aktivmaterial der positiven Elektrode, ein Leitmaterial der positiven Elektrode, und ein Bindemittel der positiven Elektrode; und
einen Elektrolyten,
wobei das erste Aktivmaterial der negativen Elektrode künstlicher Graphit ist und das zweite Aktivmaterial der negativen Elektrode natürlicher Graphit ist,
wobei das Aktivmaterial der positiven Elektrode ein lithium-nickelbasiertes Oxid vom Einzelpartikeltyp mit einem Ni-Gehalt von 70 Mol-% oder weniger umfasst, das durch die nachstehende Formel 1 dargestellt wird, und
wobei der durch die nachstehende Gleichung 1 definierte CFC 0,38 bis 1,962 beträgt,
[Formel 1] Li₁₊ₓ[NiₐCo_{b}Mn_{c}M¹_{d}]O₂
wobei in der obigen Formel 1 M¹ mindestens ein Element umfasst, das aus der Gruppe ausgewählt ist, die aus Ti, Mg, Al, Zr, Y, Ba, Ca, Sr, W, Ta, Nb und Mo besteht, und - 0,1≤x≤0,1, 0,5≤a≤0,7, 0<b<0,5, 0<c<0,5 und 0≤d≤0,2 erfüllt sind. Gleichung 1: $CFC = 100 \times {W}_{c} - \left\{\left({D}_{50 , a 1}\times {D}_{50 , a 2}\times L\times {R}_{N / P}\times {10}^{10}\right)/{MW}_{c}\right\}$
wobei in der obigen Gleichung 1 W_{c} ein Gewichtsverhältnis des Leitmaterials der negativen Elektrode bezogen auf ein Gesamtgewicht der Verbundschicht der negativen Elektrode ist, MW_{c} ein Gewichtswert von 1 Mol Kohlenstoff gemessen in Gramm ist, D_{50, a1} ein D₅₀-Wert des ersten Aktivmaterials der negativen Elektrode gemessen in Metern ist, D_{50, a2} ein D₅₀-Wert des zweiten Aktivmaterials der negativen Elektrode gemessen in Metern ist, L ein Gewichtswert des Aktivmaterials der negativen Elektrode pro Flächeneinheit der Verbundschicht der negativen Elektrode ist, die auf einer Seite der negativen Elektrode angeordnet ist, gemessen in g/25 cm², und R_{N/P} ein Kapazitätsverhältnis der negativen Elektrode zur positiven Elektrode ist.

2. Lithium-Sekundärbatterie nach Anspruch 1, wobei das Leitmaterial der negativen Elektrode ein punktförmiges Leitmaterial ist.

3. Lithium-Sekundärbatterie nach einem der vorhergehenden Ansprüche, wobei das obige W_{c} 0,001 bis 0,05 beträgt.

4. Lithium-Sekundärbatterie nach einem der vorhergehenden Ansprüche, wobei das erste Aktivmaterial der negativen Elektrode einen D₅₀ von 10 µm bis 30 µm aufweist und
das zweite Aktivmaterial der negativen Elektrode einen D₅₀ von 5 µm bis 25 µm aufweist.

5. Lithium-Sekundärbatterie nach einem der vorhergehenden Ansprüche, wobei das obige L 0,2 bis 0,5 beträgt.

6. Lithium-Sekundärbatterie nach einem der vorhergehenden Ansprüche, wobei das obige R_{N/P} 1,05 bis 1,10 beträgt.

7. Lithium-Sekundärbatterie nach einem der vorhergehenden Ansprüche, wobei das lithium-nickelbasierte Oxid vom Einzelpartikeltyp 30 oder weniger Knötchen umfasst und
die Knötchen eine durchschnittliche Partikelgröße von 0,8 µm bis 4,0 µm aufweisen.

8. Lithium-Sekundärbatterie nach einem der vorhergehenden Ansprüche, wobei das lithium-nickelbasierte Oxid vom Einzelpartikeltyp ferner eine Beschichtungsschicht die mindestens ein Element enthält das aus der Gruppe ausgewählt ist, die aus Ti, Mg, Al, Zr, Y, Ba, Ca, Sr, W, Ta, Nb und Mo besteht, auf einer Oberfläche davon umfasst.

9. Lithium-Sekundärbatterie nach einem der vorhergehenden Ansprüche, wobei die Lithium-Sekundärbatterie eine Energiedichte von 260 Wh/kg oder mehr aufweist.

10. Lithium-Sekundärbatterie nach einem der vorhergehenden Ansprüche, wobei die Lithium-Sekundärbatterie eine Ladeabschaltspannung von 4,35 V oder mehr aufweist.

11. Batteriemodul umfassend die Lithium-Sekundärbatterie nach einem der vorhergehenden Ansprüche.

12. Elektrofahrzeug umfassend das Batteriemodul nach Anspruch 11 als Stromquelle.

## Revendications

1. Batterie secondaire au lithium comprenant :
une électrode négative comprenant une couche composite d'électrode négative comprenant une matière active d'électrode négative comprenant (i) une première matière active d'électrode négative et (ii) une seconde matière active d'électrode négative, un matériau conducteur d'électrode négative et un liant d'électrode négative ;
une électrode positive comprenant une couche composite d'électrode positive comprenant une matière active d'électrode positive, un matériau conducteur d'électrode positive et un liant d'électrode positive ; et
un électrolyte,
dans laquelle la première matière active d'électrode négative est du graphite artificiel, et la seconde matière active d'électrode négative est du graphite naturel,
dans laquelle la matière active d'électrode positive comprend un oxyde à base de nickel et de lithium de type particule unique ayant une teneur en Ni de 70 % en moles ou moins représenté par la Formule 1 ci-dessous, et
dans laquelle le CFC défini par l'Équation 1 ci-dessous est de 0,38 à 1,962,
[Formule 1] Li₁₊ₓ[NiₐCo_{b}Mn_{c}M¹_{d}]O₂
dans laquelle, dans la Formule 1 ci-dessus, M¹ comprend au moins un élément choisi dans le groupe constitué par Ti, Mg, Al, Zr, Y, Ba, Ca, Sr, W, Ta, Nb et Mo, et -0,1≤x≤0,1, 0,5≤a≤0,7, 0<b<0,5, 0<c<0,5 et 0≤d≤0,2 sont satisfaits. Equation 1: $CFC = 100 \times {W}_{c} - \left\{\left({D}_{50 , a 1}\times {D}_{50 , a 2}\times L\times {R}_{N / P}\times {10}^{10}\right)/{MW}_{c}\right\}$
dans laquelle, dans l'Équation 1 ci-dessus, W_{c} est un rapport pondéral du matériau conducteur d'électrode négative par rapport à un poids total de la couche composite d'électrode négative, MW_{c} est une valeur pondérale de 1 mole de carbone mesurée en grammes, D_{50, a1} est une valeur D₅₀ de la première matière active d'électrode négative mesurée en mètres, D_{50, a2} est une valeur D₅₀ de la seconde matière active d'électrode négative mesurée en mètres, L est une valeur pondérale de la matière active d'électrode négative par unité de surface de la couche composite d'électrode négative disposée sur un côté de l'électrode négative, mesurée en g/25 cm², et R_{N/P} est un rapport de capacité de l'électrode négative sur l'électrode positive.

2. Batterie secondaire au lithium selon la revendication 1, dans laquelle le matériau conducteur d'électrode négative est un matériau conducteur de type ponctuel.

3. Batterie secondaire au lithium selon l'une quelconque des revendications précédentes, dans laquelle W_{c} ci-dessus est de 0,001 à 0,05.

4. Batterie secondaire au lithium selon l'une quelconque des revendications précédentes, dans laquelle la première matière active d'électrode négative a une D₅₀ de 10 µm à 30 µm, et
la seconde matière active d'électrode négative a une D₅₀ de 5 µm à 25 µm.

5. Batterie secondaire au lithium selon l'une quelconque des revendications précédentes, dans laquelle L ci-dessus est de 0,2 à 0,5.

6. Batterie secondaire au lithium selon l'une quelconque des revendications précédentes, dans laquelle R_{N/P} ci-dessus est de 1,05 à 1,10.

7. Batterie secondaire au lithium selon l'une quelconque des revendications précédentes, dans laquelle l'oxyde à base de nickel et de lithium de type particule unique comprend 30 nodules ou moins, et
les nodules ont une taille moyenne de particule de 0,8 µm à 4,0 µm.

8. Batterie secondaire au lithium selon l'une quelconque des revendications précédentes, dans laquelle l'oxyde à base de nickel et de lithium de type particule unique comprend en outre une couche de revêtement contenant au moins un élément choisi dans le groupe constitué par Ti, Mg, Al, Zr, Y, Ba, Ca, Sr, W, Ta, Nb et Mo, sur une surface de celui-ci.

9. Batterie secondaire au lithium selon l'une quelconque des revendications précédentes, dans laquelle la batterie secondaire au lithium a une densité d'énergie de 260 Wh/kg ou plus.

10. Batterie secondaire au lithium selon l'une quelconque des revendications précédentes, dans laquelle la batterie secondaire au lithium a une tension de coupure de charge de 4,35 V ou plus.

11. Module de batterie comprenant la batterie secondaire au lithium selon l'une quelconque des revendications précédentes.

12. Véhicule électrique comprenant le module de batterie selon la revendication 11 en tant que source d'alimentation.
